# EUROPEAN PATENT SPECIFICATION

(11) **EP 1 254 380 B1**
(45) Date of publication and mention of the grant of the patent: **16.04.2008**
(21) Application number: 01942720.2
(22) Date of filing: 12.01.2001
(51) Int. Cl.: G01S 13/56, G01S 13/93

(54) **METHOD AND ARRANGEMENT FOR DETECTING OBJECTS**
VORRICHTUNG UND VERFAHREN ZUR DETEKTION VON OBJEKTEN
TECHNIQUE ET DISPOSITIF DE DETECTION D'OBJETS

(30) Priority: 14.01.2000 SE 0000114
(43) Date of publication of application: 06.11.2002
(73) Proprietor: Saab AB, 581 88 Linköping (SE)
(72) Inventor: LEHNBERG, Daniel, S-753 27 Uppsala (SE); TULLSSON, Bert-Eric, S-175 45 Järfälla (SE)
(74) Representative: Falk, Bengt
(86) International application number: PCT/SE2001/000047
(87) International publication number: WO 2001/053851

(56) References cited:
- EP-A1- 0 188 757
- WO-A-93/15416

## Description

The present invention relates to a method for detecting objects, such as human beings, in a track area of a railway system, which track area is monitored by at least one radar sensor which is mounted in a fixed manner relative to the track area and the surveillance area of which is limited at least along parts of the track area by excluding combinations of distance and angle which are not to be included in the surveillance area, information supplied by the radar sensor being processed for detecting objects.

It has long been known to use radar for surveillance in various contexts, as will be illustrated by the following survey.

A standard use of active radar is surveillance and measurement within an area which is instantaneously limited in terms of angle by the main lobe of the radar antenna. Within this area, measurement is carried out of distance or radial velocity, using Doppler techniques, or of both of these. The scanned area can be enlarged by the radar antenna being turned or rotating so that the antenna lobe sequentially covers a larger area. The turning can be mechanical or electric. The resolution cell of the radar is nevertheless still determined by the size of the main lobe in angular directions (in azimuth and elevation) and by the size of the range gap and the Doppler gap, whichever is applicable for the radar used. An exception is what are known as array antennas with high resolution, where the angular resolution can under certain conditions be made finer than the standard main lobe.

In the standard uses, the surveillance primarily covered targets in the air (aircraft) and targets at sea (vessels), often at considerable distances. In this context, reference is made to Skolnik, Introduction to Radar Systems, 2nd ed., McGraw-Hill 1980, ISBN 0-07-057909-1, 0-07-066572-9 (paperback).

There are modern applications where "radar surveillance" is performed over shorter distances. Examples, and examples of references, are:
- Automotive radar, for example for cruise control. Ref. Eriksson/Ås, Automotive radar for adaptive cruise control and collision warning/avoidance, Proc. IEE International Radar Conference Radar 97 pp. 16-20, Edinburgh 14-16 Oct. 1997.
- Ground surveillance at airports.
   Ref. Ferri/Galati et al, Design and field revaluation of a millimetre-wave surface movement radar, Proc. IEE International Radar Conference Radar 97 pp. 6-10, Edinburgh 14-16 Oct. 1997.
- Surveillance of roads and junctions, traffic counting. Ref. US patent 5,339,081, Jefferis et al, Aug. 16, 1994, Vehicle detection systems.
- Surveillance of road/railway level crossings.
   Ref. US patent 5,774,045, Helma et al, Jun. 30, 1998, Arrangement for detecting objects in a region to be monitored.
   Ref. WO 93/15416, Gustavsson, A device for supervising an area.

In these contexts, the radar searches for objects or articles of the car or traffic obstacle type. The ranges are of the order of tens of metres to several hundred metres, but greater in the case of airport surveillance.

Another application of radar, which is mentioned here only on account of the name, is radar which attempts to look down through the ground (GPR, Ground Penetrating Radar). One application is, for example, to establish by radar whether walls in old (railway) tunnels are in need of repair. In this context, reference is made to D. J. Daniels, Surface-penetrating radar, IEE 1996, ISBN 0-85296-862-0, section 7.6.1, "Tunnels". Buried pipelines and power cables are often searched for (for repair) as are, in military contexts, mines. This is frequently referred to as "underground radar" but has nothing to do with "underground" in the sense of "subway" or "métro".

A major safety problem associated with trackbound traffic and in particular with railway systems with tunnels is frequent unauthorized access to the tracks, either people/objects jumping/falling/being thrown down onto the tracks from the platforms, or people from the platforms going into the tunnels. Every year, a number of people are run over as a result of this. Studies have highlighted the difficulties of limiting access to the tracks in a reasonable manner which does not restrict the traffic capacity. For example, movable walls in front of the platforms are not desirable because they increase the minimum time interval between trains in rush-hour traffic. Detector systems, with sensors which detect people and obstacles on the tracks, are to be preferred then. However, electro-optical sensors, for example personnel detectors based on lasers, have a very limited range of the order of 10-15 metres. An example of a radar detector system using a laser based sensor is known from the above cited reference WO 93/15146, mainly intended for road/railway crossings. To cover platforms which may be 180-200 metres long, a great many sensors are therefore required, which is both impractical and expensive as far as both installation and operation are concerned.

Furthermore according to reference WO 93/15146 definition of the extent of the supervising area is achieved by design, adjustment or programming of the signal processing unit.

The object of the present invention is to produce a method and an arrangement for detecting objects in a track area which do not have the disadvantages of known electro-optical sensors, which make it possible to use radar and which can be used effectively in railway systems for detecting both people and other objects. The object of the invention is achieved by a method
characterized in that the detection is performed in connection with underground stations, and in that the surveillance area is limited to the tunnel walls and the platform of the underground stations by processing the information supplied by the monitoring radar sensors. By using two or possibly three radar sensors, the track area along platform lengths as mentioned above can be effectively monitored. The invention makes it possible for people on the track to be detected effectively, and many human lives can thus be saved at the same time as the burden of the train drivers can be relieved.

In order to prevent the alarm being raised on account of people on the platform, the area which the radar sensor is to monitor is therefore restricted to the track area by detecting only objects associated with combinations of distance and angle lying within the track area. The area within which the radar is to raise the alarm is therefore only a fraction of the area scanned, which is in general a sector. Moreover, many stations within an underground railway lie on a curve and have curved tracks and curved platforms. Fine angular resolution in combination with fine range resolution make it possible for the radar to restrict the searching area to the track itself and to ignore the platform. Note that the searching area is not a sector, and does not even have to be limited by straight lines. Instead, limitation in terms of angle is distance-dependent.

An advantageous method according to the invention is characterized in that a number of successive radar images of the monitored area delivered via the radar sensor are low-pass filtered to produce a static image of all the stationary objects within the monitored area, in that an archive image is generated via the radar sensor on occasions when the monitored area is traffic-free, and in that the static image is compared with the archive image to eliminate static clutter and to detect any new stationary objects. By low-pass filtering a number of successive radar images of the monitored area, an image of all the stationary objects within the area (static image) is obtained. A "stationary object" is one which has been located in the same place for, for example, more than 1 minute. A walking person will therefore not be included. On the other hand, a person lying unconscious on the track will be included in the static image. The coordinates in the image are angle and distance.

In particular, a static image can be produced on occasions when there is no traffic. Such an image contains all the radar echoes from walls, ceiling, platforms etc. but not from trains, people etc. This image can be referred to as an "archive image". The archive image is updated at regular intervals, for example once every day, or at another suitable time. By comparing the static image with the archive image, the static clutter can be eliminated.

According to another advantageous method, a dynamic image of the monitored area is advantageously produced by eliminating stationary objects in images delivered via the radar sensor for the purpose of detecting moving objects. By signal processing of the "high-pass filtering" type, in which Doppler information is also included, all the moving targets, for example walking people, within the monitored area are brought out. This has certain similarities with what is known as MTI filtering in ordinary radar (see the Skolnik reference above) and considerably increases sensitivity in the detection of moving targets. The use of a dynamic image for detecting people walking in tunnels is novel. The static clutter has disappeared completely in the dynamic image. By means of the dynamic image, it is possible to determine the position in terms of angle and distance of the moving targets.

The handling of static and dynamic images is discussed in greater detail in the reference D. Lehnberg, Presentation Signal Processing for an Alternative Application of an Automotive Radar Sensor, IR-SB-EX-9922, Sept. 1999, Signal Processing, Dept of Signals, Sensors & Systems, Royal Inst. of Technology, S-100 44 Stockholm.

In order to raise the alarm, information about new objects in the track area can be supplied to an ordinary safety and signal system, and any trackbound vehicles situated in or in the vicinity of the monitored track area can advantageously be stopped automatically in the event of new objects being detected. In this way, those responsible for safety, such as drivers and those responsible centrally for surveillance, can easily assimilate the relevant information, and collisions with objects can be prevented.

According to a suitable method, the track area is defined by the area which is temporarily masked by an arriving or departing train. An underground train will instantaneously produce a very strong echo in the radar. With the radar, it is easy to identify when a train is pulling into or out of the station. It is then possible to define the area within which the alarm is to be raised as = the track = the area which is temporarily masked by a train. This calculation needs to be performed only once per sensor.

The invention is especially suitable for use in underground railway systems. Here, underground railway (Underground, subway, U/S-Bahn, Métro etc.) means a trackbound system, at least in part underground, for transporting people and sometimes also goods.

When the invention is used for detecting people and other obstacles on the tracks in an underground railway, or another railway in a tunnel, particular requirements are made of the radar.

The technical difference with regard to said previous applications is that the radar clutter, in this context undesirable radar reflections from tunnel walls, ceiling etc., is so great in relation to the case of applications in free space that special methods have to be used.

The following requirements are made of the radar:
- fine range resolution
- Doppler resolution
- fine angular resolution by means of a small main lobe and high frequency, preferably frequencies corresponding to millimetre wavelength
- the radar is to provide images, intensity and Doppler information as a function of angle and distance of the scanned area with sufficiently great updating frequency.

The invention will be described in greater detail below in exemplified form with reference to appended drawings, in which:
Figure 1a shows diagrammatically a vertical section through a tunnel with a platform and a track area;
Figure 1b shows diagrammatically a horizontal section through the tunnel according to Figure 1a;
Figure 2 shows diagrammatically the arrangement for detecting objects;
Figure 3a shows an example of a static image obtained;
Figure 3b shows the result of a comparison of the static image according to Figure 3a with an archive image;
Figure 4a shows diagrammatically in horizontal section a first example of an installation in a tunnel with a curved track, and
Figure 4b shows diagrammatically in horizontal section a second example of an installation in a tunnel with a curved track.

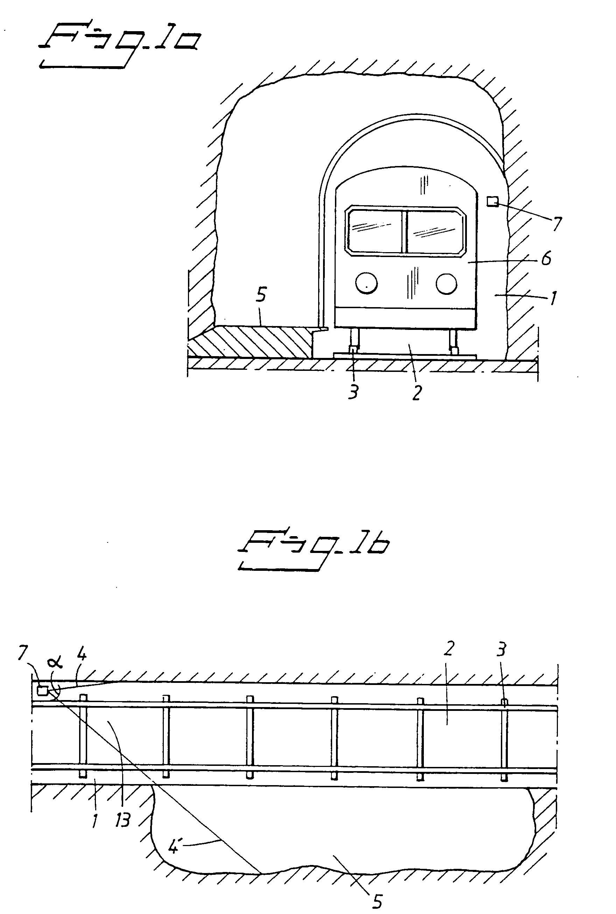

The tunnel 1 shown in Figures 1a and 1b accommodates a track area 2 with a straight track 3. Alongside the track 3, there is a platform 5. A train, for example an underground train, has been designated by 6 in Figure 1a, while the train is not shown in Figure 1b. A detection arrangement 7 is mounted at one end of the platform 5 and preferably on a tunnel wall opposite the platform. The possible scanning area of the detection arrangement has been marked by the lines 4, 4' which form an angle α in relation to one another.

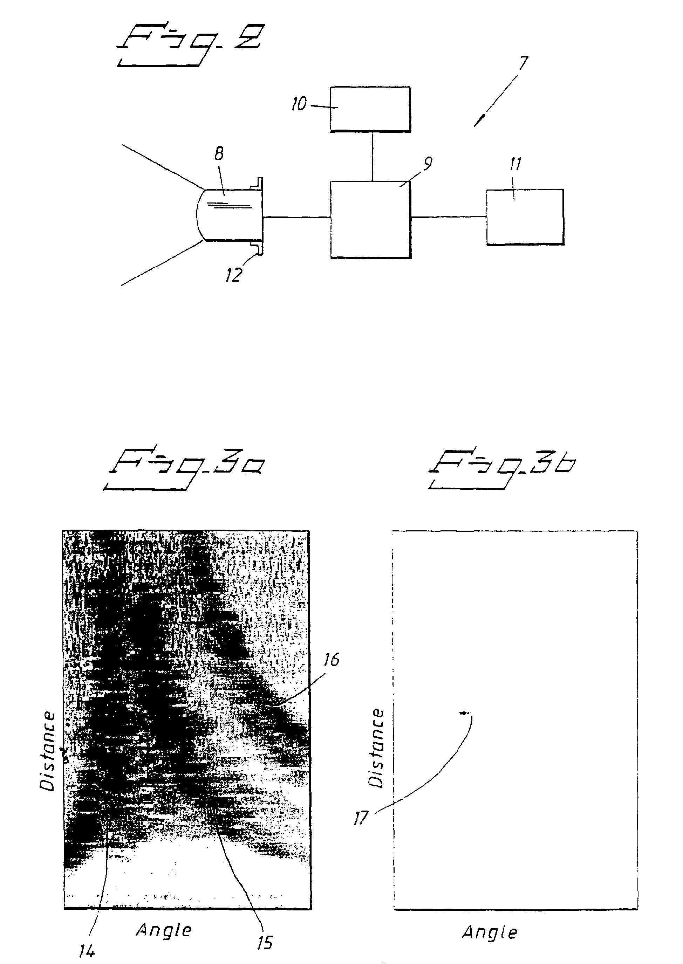

Archive images, static images and dynamic images are recorded by means of the detection arrangement 7 shown diagrammatically in Figure 2 in a manner which will be described in greater detail further on in the description. The detection arrangement 7 comprises a radar sensor 8, a processor unit 9, a memory unit 10 and an indicator unit 11. The radar sensor 8 has means 12 for fixed mounting in the tunnel 1, for example on a tunnel wall. The processor unit 9 and the memory unit 10 can form part of the radar sensor 8, while the indicator unit 11 is advantageously located elsewhere. The indicator unit can consist of any means suitable for supplying appropriate information. Optical indication, for example some form of lamp or display, as well as acoustic indication or combinations thereof are some possible alternatives. The indicator unit can advantageously be connected to or form part of an ordinary safety and signal system.

By low-pass filtering a number of successive radar images of the monitored area picked up by the radar sensor, which area has in a simple embodiment in Figure 1b been marked as a sector 13 with an angle α, a static image of all the stationary objects within the sector 13 is obtained. Low-pass filtering can be performed in the processor unit 9.

The static image is compared with an archive image. The archive image is obtained by taking an image on occasions when there is no traffic by means of the radar sensor and storing the image in the memory unit 10. The difference between an archive image and a static image indicates in principle new stationary objects.

Figure 3a shows an example of a static image obtained in the Stockholm underground railway by means of a detection arrangement according to the invention and presented on a decibel scale with coordinates for angle and distance. In the image, strong radar reflections 14, 15, 16 from the left tunnel wall, the platform and, respectively, the right tunnel wall can be seen. By comparing this static image with an archive image, the majority of the reflections are eliminated, as can be seen from the image in Figure 3b presented on a linear scale with coordinates for angle and distance. In principle, a weak radar echo 17 remains. In this example, it is a person located on the track without moving.

In order to detect moving objects, for example walking people, signal processing of the "high-pass filtering" type is also introduced, in which Doppler information is also included. A dynamic image is obtained, and the position in terms of angle and distance of the moving targets can be determined.

In order to prevent the detection arrangement reacting to people moving on the platform, the scanning area of the radar sensor is restricted to the track area itself. This is effected by programming the detection arrangement with information relating to the combinations of distances and angles to be included in the scanning area. By using a radar sensor with the performance indicated above, the scanning area can be limited so as to follow the track area very precisely, and there is thus no risk of false alarms originating from people moving on the platform.

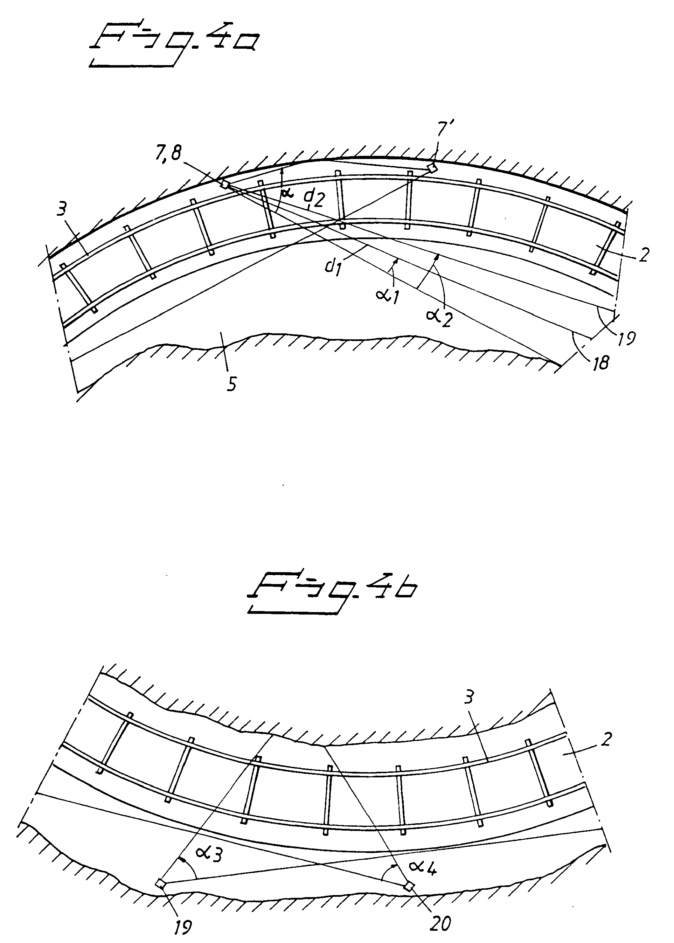

With reference to Figures 4a and 4b, two examples of installations in the case of curved platforms are discussed.

Figure 4a shows an essentially convex curvature of the edge of the platform 5 where it meets the track area 2 and the associated curvature of the track area 2. A first detection arrangement 7 with a radar sensor 8 and a second detection arrangement 7' are mounted on a tunnel wall opposite the platform 5. The angle α marks a sector which it is possible for the first detection arrangement to scan. The scanning area is limited to the track area by virtue of only combinations of angles and distances within the track area being included in the scanning. This means that, for the distance d₁, signal values which originate from angles smaller than α₁ are excluded. In the same way, for the distance d₂, signal values which originate from angles smaller than α₂ are excluded. Corresponding exclusion applies for all the angles within the sector.

Figure 4b shows an installation with two radar sensors 19, 20 on a platform 5 which is essentially concave where it meets the track area 2. The radar sensor 19 can scan an angle α₃, while the radar sensor 20 can scan an angle α₄. In the same way as in the example according to Figure 4a, signal values which originate from the platform area are excluded.

In order to identify the track area 2, measurement can be carried out on an arriving or departing train 6, see Figure la. The strong echo which the train produces instantaneously coincides in principle with the track area which is to be monitored, and the surveillance area for objects in motion can thus be defined easily.

An example of a radar system which meets the requirements of being suitable for track access surveillance is an automotive radar system developed by the applicant. In this context, reference is made to Eriksson/Ås as mentioned above.

The "automotive radar" is a radar sensor which is used in order to make driving a car more convenient and/or safer. The first applications are within the area of ACC, Adaptive Cruise Control. The next stage is what is known as CW/A, Collision Warning/Avoidance. The radar sensor continuously monitors an area in front of the vehicle in order to detect obstacles, for example slow vehicles in the same lane.

For automotive radar, use is made of the frequency band 76-77 GHz (wavelength 4 mm), which has much in common technically with the usual millimetre waveband around 94 GHz. The automotive radar has an instrumented range of roughly 200 metres. The construction has a moving Cassegrain antenna which gives very good angular precision within the scanned area. Such an advanced antenna is the key to the great potential of the construction and affords the possibility of alternative uses outside the field of automotive radar. Trials have shown that the automotive radar as mentioned above can detect walking pedestrians, on a road, at a distance of at least 180 metres.

Some technical data for CelsiusTech's automotive radar:
- Radar
   Frequency 76-77 GHz
   Output power 10 mW
   Modulation FMCW
- Performance
   Range 1-200 m
   Speed range up to 100 m/s (360 km/h)
   Angular coverage side ±8.5°
   Refresh cycle 10 Hz
   Range gap < 1 m
   Lobe width azimuth roughly 25 mrad (1.5°)
   Angular precision in relation to point target roughly 0.1°.

The invention is not limited to the exemplary embodiments described above but can be modified within the scope of the patent claims below and the inventive idea. For example, only exemplary embodiments with one track in the track area have been shown. However, there is nothing to prevent a number of tracks being monitored using the same equipment.

## Claims

1. Method for detecting objects, such as human beings, in a track area of a railway system, which track area is monitored by at least one radar sensor which is mounted in a fixed manner relative to the track area and the surveillance area of which is limited at least along parts of the track area by excluding combinations of distance and angle which are not to be included in the surveillance area, information supplied by the radar sensor being processed for detecting objects, **characterized in that** the detection is performed in connection with underground stations, and **in that** the surveillance area is limited to an area excluding the tunnel walls and the platform of the underground stations by processing the information supplied by the monitoring radar sensors.

2. Method according to Patent Claim 1, **characterized in that** a number of successive radar images of the monitored area delivered via the radar sensor are low-pass filtered to produce a static image of all the stationary objects within the monitored area, **in that** an archive image is generated via the radar sensor on occasions when the monitored area is traffic-free, and **in that** the static image is compared with the archive image to eliminate static clutter and to detect any new stationary objects.

3. Method according to either of the preceding patent claims, **characterized in that** a dynamic image of the monitored area is produced by eliminating stationary objects in images delivered via the radar sensor for the purpose of detecting moving objects.

4. Method according to Patent Claim 3, **characterized in that** the position in terms of angle and distance is determined for objects detected in the dynamic image.

5. Method according to any one of the preceding patent claims, **characterized in that** the track area is defined by the area which is temporarily masked by an arriving or departing train.

6. Method according to any one of the preceding patent claims, **characterized in that** information about new objects in the track area is supplied to an ordinary safety and signal system.

7. Method according to any one of the preceding patent claims, **characterized in that** any trackbound vehicles situated in or in the vicinity of the monitored track area are stopped automatically in the event of new objects being detected.

## Revendications

1. Procédé pour la détection d'objets, tels que les êtres humains, dans une zone des voies d'un système ferroviaire, ladite zone des voies étant contrôlée par au moins un détecteur radar qui est monté de façon fixe par rapport à la zone des voies et sa zone de surveillance est limitée au moins le long des parties de la zone des voies en excluant les combinaisons de distance et d'angle qui ne doivent pas être incluses dans la zone de surveillance, les informations fournies par le détecteur radar étant traitées pour la détection d'objets, **caractérisé en ce que** la détection est réalisée en liaison avec des stations souterraines, et **en ce que** la zone de surveillance est limitée à une zone excluant les parois du tunnel et le quai des stations souterraines en traitant les informations fournies par les détecteurs radar de contrôle.

2. Procédé selon la revendication 1, **caractérisé en ce que** plusieurs images radar successives de la zone contrôlée fournies par le détecteur radar sont filtrées passe-bas pour produire une image statique de tous les objets stationnaires à l'intérieur de la zone contrôlée, **en ce qu'**une image d'archive est générée par le détecteur radar quand la zone contrôlée est exempte de trafic, et **en ce que** l'image statique est comparée à l'image d'archive pour éliminer les fouillis d'échos statiques et pour détecter tout nouvel objet stationnaire.

3. Procédé selon l'une quelconque des revendications précédentes, **caractérisé en ce qu'**une image dynamique de la zone contrôlée est produite en éliminant les objets stationnaires dans les images fournies par le détecteur radar afin de détecter les objets mobiles.

4. Procédé selon la revendication 3, **caractérisé en ce que** la position en termes d'angle et de distance est déterminée pour les objets détectés dans l'image dynamique.

5. Procédé selon l'une quelconque des revendications précédentes, **caractérisé en ce que** la zone des voies est définie par la zone qui est temporairement masquée par un train à l'arrivée ou au départ.

6. Procédé selon l'une quelconque des revendications précédentes, **caractérisé en ce que** les informations à propos des nouveaux objets dans la zone des voies sont fournies à un système ordinaire de sécurité et de signalisation.

7. Procédé selon l'une quelconque des revendications précédentes, **caractérisé en ce que** tout véhicule sur rail situé dans ou à proximité de la zone contrôlée des voies est arrêté automatiquement en cas de détection de nouveaux objets.

## Patentansprüche

1. Verfahren zum Detektieren von Gegenständen, wie beispielsweise menschlichen Wesen, im Gleisbereich eines Eisenbahnsystems, wobei der Gleisbereich durch wenigstens einen Radarsensor überwacht wird, der mit Bezug auf den Gleisbereich feststehend montiert ist und dessen Überwachungsbereich wenigstens entlang von Teilen des Gleisbereichs begrenzt ist, indem Kombinationen aus Abstand und Winkel ausgeschlossen sind, die nicht in dem Überwachungsbereich enthalten sind, wobei von dem Radarsensor gelieferte Information zum Detektieren von Gegenständen bearbeitet wird, **dadurch gekennzeichnet, dass** die Erfassung in Verbindung mit Untergrundbahnstationen durchgeführt wird und dass der Überwachungsbereich durch Verarbeiten der von den Überwachungsradarsensoren gelieferte Information auf einen Bereich mit Ausnahme der Tunnelwände und des Bahnsteigs der Untergrundbahnstationen begrenzt ist.

2. Verfahren nach Anspruch 1, **dadurch gekennzeichnet, dass** eine Anzahl von aufeinanderfolgenden Radarbildern des überwachten Bereichs, die über den Radarsensor geliefert werden, tiefpassgefiltert werden, um ein statisches Bild aller stationären Gegenstände innerhalb des überwachten Bereichs zu erzeugen, dass ein Archivbild über den Radarsensor zu Gelegenheiten erzeugt wird, wenn der überwachte Bereich verkehrsfrei ist, und dass das statische Bild mit dem Archivbild verglichen wird, um statisches Störecho zu eliminieren und irgendwelche neuen stationären Gegenstände zu erfassen.

3. Verfahren nach einem der vorstehenden Ansprüche, **dadurch gekennzeichnet, dass** ein dynamisches Bild des überwachten Bereichs erzeugt wird, indem stationäre Gegenstände in über den Radarsensor gelieferten Bildern eliminiert werden, um bewegte Gegenstände zu erfassen.

4. Verfahren nach Patentanspruch 3, **dadurch gekennzeichnet, dass** die Position in Größen von Winkel und Abstand für in dem dynamischen Bild erfasste Gegenstände bestimmt wird.

5. Verfahren nach einem der vorstehenden Ansprüche, **dadurch gekennzeichnet, dass** der Gleisbereich durch den Bereich definiert ist, der zeitweilig von einem ankommenden oder abfahrenden Zug abgedeckt wird.

6. Verfahren nach einem der vorstehenden Ansprüche, **dadurch gekennzeichnet, dass** Information über neue Gegenstände im Gleisbereich einem gewöhnlichen Sicherheits- und Signalsystem geliefert wird.

7. Verfahren nach einem der vorstehenden Ansprüche, **dadurch gekennzeichnet, dass** jegliche schienengebundene Fahrzeuge, die sich in oder in der Nähe des überwachten Gleisbereichs befinden, automatisch für den Fall gestoppt werden, dass neue Gegenstände erfasst werden.
